# DEMANDE DE BREVET EUROPEEN

(11) **EP 1 168 693 A1**
(43) Date de publication de la demande: **02.01.2002**
(21) Numéro de dépôt: 01401749.5
(22) Date de dépôt: 29.06.2001
(51) Int. Cl.: H04H 1/02, G07F 17/30, H04L 29/06, G06F 17/30

(54) **Procédé de distribution d'informations audiovisuelles et système de distribution d'informations audiovisuelles**

(30) Priorité: 29.06.2000 FR 0008394
(71) Demandeur: TOUCHTUNES MUSIC CORPORATION, Las Vegas, NV 89104 (US)
(72) Inventeur: Nathan, Guy, Nun's Island, Quebec H3E 1H7 (CA)
(74) Mandataire: Debay, Yves

(57) **Abrégé**

La présente invention concerne un procédé de distribution d'informations audiovisuelles entre un serveur (2) et au moins un terminal (1) relié par des moyens (3) de communication bi-directionnels au serveur caractérisé en ce que le procédé comprend :
- une étape d'enregistrement de chaque terminal auprès du serveur pour identifier de façon unique le terminal et enregistrer le type de terminal ;
- une étape (402) d'authentification du terminal par le serveur lors de chaque connexion du terminal au serveur ;
- une étape (413) de téléchargement d'au moins une sélection d'informations audiovisuelles choisies (406) par l'utilisateur du terminal pendant sa connexion au serveur, le format dans lequel sont transmises les sélections d'informations audiovisuelles étant tel que seul le terminal destinataire peut les exploiter ;
- une étape de mémorisation de l'utilisation de chaque sélection d'informations audiovisuelles dans une base de données du serveur.

## Description

La présente invention concerne un procédé de distribution d'informations audiovisuelles et un système de distribution d'informations audiovisuelles.

Il est connu dans l'art antérieur, des dispositifs permettant à un utilisateur disposant d'un terminal et d'une connexion à un serveur d'informations audiovisuelles de télécharger des morceaux de musique pour les écouter en temps réel ou les mémoriser sur des moyens de mémorisation, soit associés au terminal, soit transportables, afin de pouvoir rejouer ou dupliquer un nombre illimité de fois les morceaux de musiques. Cependant, la plupart de ces dispositifs ne permettent pas le calcul de redevances dues aux ayants droit des morceaux de musique puisque aucun de ces dispositifs ne permet de vérifier quelle utilisation est faite du morceau de musique.

La présente invention a donc pour objet de pallier les inconvénients de l'art antérieur en proposant un procédé de distribution d'informations audiovisuelles permettant d'identifier et de calculer les droits de reproduction des informations audiovisuelles distribuées.

Ce premier objectif est atteint, selon la revendication 1, par un procédé de distribution d'informations audiovisuelles entre un serveur et au moins un terminal relié par des moyens de communication bidirectionnels au serveur.

Des développements supplémentaires de l'invention son décrits dans les revendications 2 à 8.

Un deuxième but de l'invention consiste à proposer un système de distribution d'informations audiovisuelles permettant de calculer les droits de reproduction des informations audiovisuelles distribuées.

Ce deuxième but est atteint par un dispositif de distribution d'informations audiovisuelles selon la revendication 9.

Des développements supplémentaires de l'invention sont décrits dans les revendications 10 à 17.

L'invention, avec ses caractéristiques et avantages, ressortira plus clairement à la lecture de la description faite en référence aux dessins annexés dans lesquels :
- la figure 1 représente un diagramme simplifié du dispositif de distribution d'informations audiovisuelles selon l'invention ;
- la figure 2 représente le logigramme des opérations réalisées lors de la communication entre le serveur et un terminal du dispositif de distribution d'informations audiovisuelles selon l'invention ;
- la figure 3 représente un schéma du terminal du dispositif de distribution d'informations audiovisuelles selon l'invention.

Avant de décrire l'invention, il convient de rappeler dans quel contexte est située la diffusion d'informations audiovisuelles. Tout d'abord, par informations ou sélections audiovisuelles, il faut comprendre informations numériques ou issues d'une numérisation représentative d'une oeuvre artistique audiovisuelle. Selon la législation en vigueur, dans la plupart des pays toute reproduction sonore ou copie d'une oeuvre artistique ne peut se faire sans l'accord de son ou de ses ayants droit, à savoir notamment, son ou ses auteurs et/ou compositeurs et/ou interprètes et/ou promoteur (maison de disques) et/ou distributeurs. En règle générale, cet ou ces accords sont donnés en échange de paiement de redevances.

A titre d'exemple nous décrirons par la suite la portée et le contenu de certains droits.

Les droits sur les oeuvres artistiques audiovisuelles sont de plusieurs types en fonction notamment de l'utilisation qui est faite de l'oeuvre artistique. Dans le cas d'une oeuvre musicale, il existe tout d'abord, des droits liés à la reproduction sonore de l'oeuvre. Ainsi, dès qu'une oeuvre musicale est reproduite, c'est-à-dire dès qu'elle est jouée sur un dispositif de restitution sonore, des droits de reproduction (en anglais master right) sont dus à tout ou partie des ayants droits. Lorsque l'oeuvre musicale est copiée, c'est-à-dire que les informations représentatives de l'oeuvre musicale sont transférées sur un autre support, alors, pour chaque copie de l'oeuvre, des droits de copie (en anglais, mecanical right) sont dus à tout ou partie des ayants droits. Ainsi, tout téléchargement d'une chanson d'une mémoire d'un serveur vers une autre mémoire d'un terminal distant constitue une copie d'une oeuvre artistique.

Lorsque l'oeuvre artistique consiste en l'association d'images fixes ou animées et de son, la reproduction de cette oeuvre donne lieu également à des droits de synchronisation (en anglais: synchronisation right) qui peuvent être négociés de gré à gré entre les ayants droit et les utilisateurs de l'oeuvre.

Lorsqu'une oeuvre artistique audiovisuelle est reproduite en public elle donne lieu, dans certains cas, à des redevances (en anglais public performance right) perçues en général par des entités juridiques représentant les ayant droits et mandatées pour collecter les redevances selon des règles prédéfinies, mais éventuellement variables, d'une oeuvre à l'autre.

Les droits qui viennent d'être cités sont définis à titre d'exemple, d'autres droits liés à l'utilisation d'oeuvres artistiques audiovisuelles peuvent exister ou apparaître. De même, la définition des droits et notamment leurs conditions d'applications peuvent changer. Cependant, quel que soit le type de droit issu de l'utilisation d'une oeuvre artistique et quelles que soient ses conditions d'applications, le procédé et le dispositif selon l'invention peuvent être appliqués.

Comme expliqué précédemment, les dispositifs de distribution d'informations audiovisuelles de l'art antérieur ne prévoient pas de moyens permettant de déterminer le montant des droits à verser aux ayants droit et n'exercent aucun contrôle sur l'utilisation des sélections audiovisuelles une fois qu'elles ont été distribuées. Par conséquent, la distribution d'informations audiovisuelles par l'intermédiaire de ces dispositifs de l'art antérieur est la plupart du temps réalisée au mépris des droits des tiers sur les oeuvres artistiques correspondant aux informations audiovisuelles.

La présente invention propose de résoudre ce problème en fournissant un dispositif et un procédé de distribution d'informations audiovisuelles permettant de prendre en compte le paiement des redevances et des taxes aux ayants droit, sur une oeuvre artistique, lorsque l'oeuvre est commandée par l'intermédiaire d'un terminal relié à un serveur spécialisé dans la distribution d'oeuvres artistiques sous forme d'informations audiovisuelles au travers d'un réseau de communication.

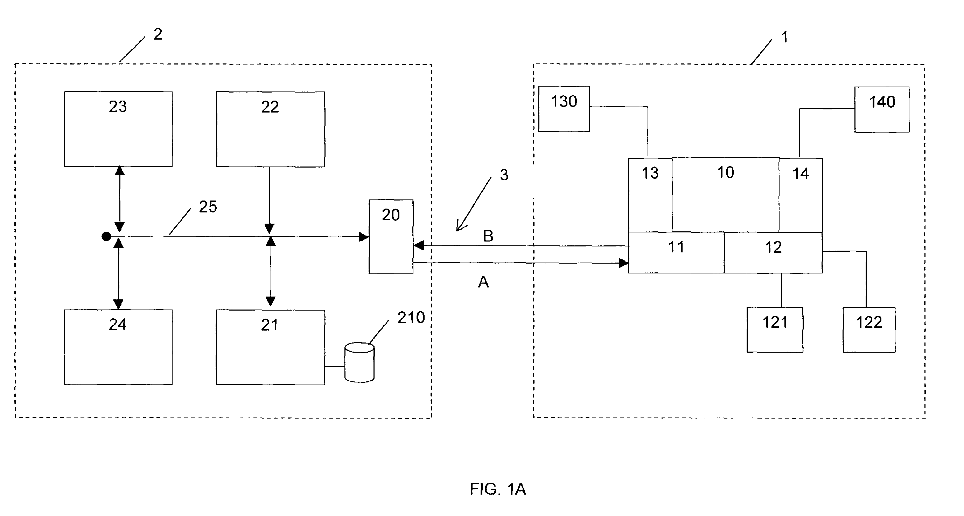

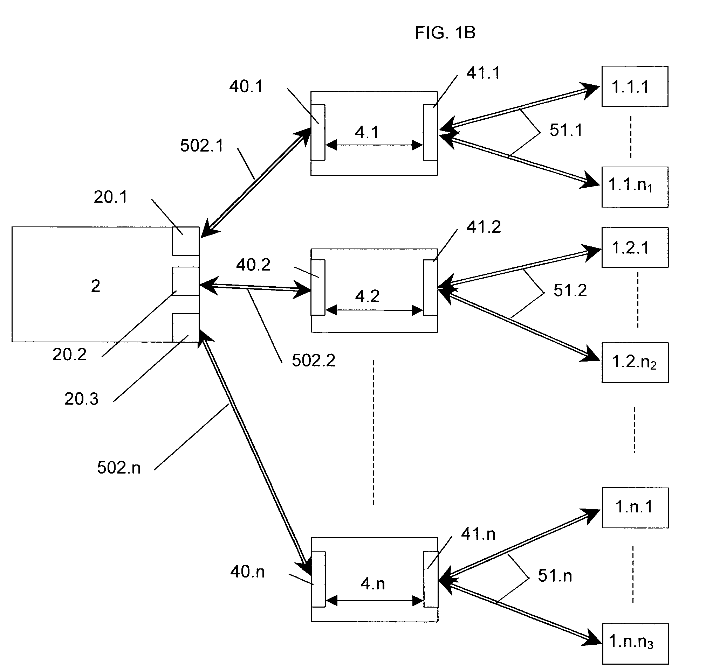

Un mode de réalisation non limitatif de l'invention va à présent être décrit en référence aux figures 1A et 1B. Le dispositif décrit par la suite, permet de prendre en compte les droits liés à la reproduction sonore et les droits liés à la copie, notamment d'oeuvres sonores. Cependant, en appliquant les mêmes principes, il est possible de prendre en compte tous les droits liés à une utilisation quelconque d'une oeuvre artistique audiovisuelle.

Le dispositif de distribution selon l'invention comprend un serveur (2) de distribution d'informations audiovisuelles connecté par une liaison (3) de communication bi-directionnelle, à au moins un terminal (1) distant. La figure 1 ne représente qu'un seul terminal. Cependant le serveur (2) selon l'invention peut être connecté de façon simultanée et par des liaisons de différents types à plusieurs terminaux (1).

Le serveur (2) comprend un module (20) de gestion de communication avec les terminaux (1). Ce module (20) peut comprendre différents sous-modules afin de prendre en compte les différents types de liaisons de communication possibles. Ainsi, un premier sous-module comprend une interface de communication permettant la prise en compte d'une liaison de communication de type RNIS (réseau numérique à intégration de service, en anglais ISDN: Integrated Services Digital Network). Un deuxième sous-module comprend une interface de communication permettant la prise en compte d'une liaison de communication de type satellite. Un troisième sous-module comprend une interface de communication permettant la prise en compte d'une liaison de communication de type téléphonique, notamment filaire classique ou de type ADSL ou cellulaire. Un quatrième sous-module comprend une interface de communication permettant la prise en compte d'une liaison de communication de type réseau câblé de télévision. Le module de gestion de communication comprend des moyens de transcription afin d'une part, dans le sens (A) de communication serveur terminal, de transcrire les informations issues du serveur dans le format adapté au type de la liaison (3), et d'autre part, dans le sens (B) de communication terminal serveur, de transcrire les informations issues du terminal dans le format adapté au type de la liaison (3). Le module (20) de gestion de communication comprend des moyens d'analyse des signaux reçus des terminaux (1) pour extraire de ces signaux les requêtes des terminaux ou les réponses des terminaux (1) aux requêtes du serveur (2). Ensuite, le module (20) de gestion de communication comprend des moyens de transmettre des requêtes ou les réponses vers le module du serveur concerné.

La communication entre les différents modules du serveur (2) est réalisée par l'intermédiaire d'un bus (25) bi-directionnel connu en soi.

Un premier module (21), dit d'authentification, comprend, par exemple dans une base (210) de données, une information représentative d'une identification de tous les terminaux (1) susceptibles d'établir une connexion avec le serveur (2). Le module (21) d'authentification comprend des moyens de mise à jour de la base (210) de données pour que chaque fois qu'un utilisateur souhaite qu'un nouveau terminal puisse se connecter au serveur (2), une nouvelle identification soit affectée à ce nouveau terminal (1). Cette mise à jour est effectuée, par exemple, par l'intermédiaire d'une procédure d'enregistrement. Cette procédure d'enregistrement a pour but, d'une part d'affecter un identifiant et, par exemple, un mot de passe unique à chaque terminal. De même, cette procédure définit quelle est l'utilisation prévue pour les informations qui seront transmises par la suite au serveur (2). En effet, il existe plusieurs façons d'utiliser les informations audiovisuelles transmises par le serveur (2). Dans un premier cas, le terminal (1) peut être utilisé uniquement pour écouter en temps réel une sélection musicale commandée au serveur (2). Dans un deuxième cas, le terminal (1) peut être utilisé pour mémoriser une sélection musicale commandée au serveur (2) pour la rejouer un nombre illimité de fois. Ainsi, dans le premier cas, une seule redevance pour une seule diffusion est due aux ayants droit. Dans le deuxième cas, il y a deux cas de figure possibles. Dans un premier cas de figure, doivent être calculées et payées d'une part une redevance pour copie de l'oeuvre et d'autre part une redevance pour chaque exécution sonore de la sélection. Dans un deuxième cas de figure, le paiement de la mémorisation et de l'utilisation illimitée est réalisé de manière forfaitaire par l'utilisateur. Ce cas de figure est très similaire à l'achat de chansons sur des supports classiques tel qu'un CD Audio, une cassette. Dans ce cas, les redevances peuvent également être calculées de manière forfaitaire pour chaque téléchargement. Ainsi, on comprend que la gestion de ces utilisations est nécessairement différente puisque ces utilisations donnent lieu à des paiements de redevances calculées différemment. Cette différence de calcul réside non seulement notamment dans le taux appliqué mais également dans le nombre de fois que ce taux doit être appliqué.

Ainsi, lors de l'enregistrement, un code ou une clé unique, par exemple, inconnu de l'utilisateur est affecté au terminal pour déterminer la ou les utilisations qui pourront être faites des informations audiovisuelles envoyées par le serveur (2) au terminal (1). Ce code ou cette clé unique est associé à l'identifiant et au mot de passe du terminal. Par utilisation, il faut comprendre toutes les utilisations envisageables pour une information audiovisuelle, à savoir la reproduction dans un cadre privé ou public, la copie, la reproduction, sur demande ou de façon aléatoire, d'une liste de sélection.

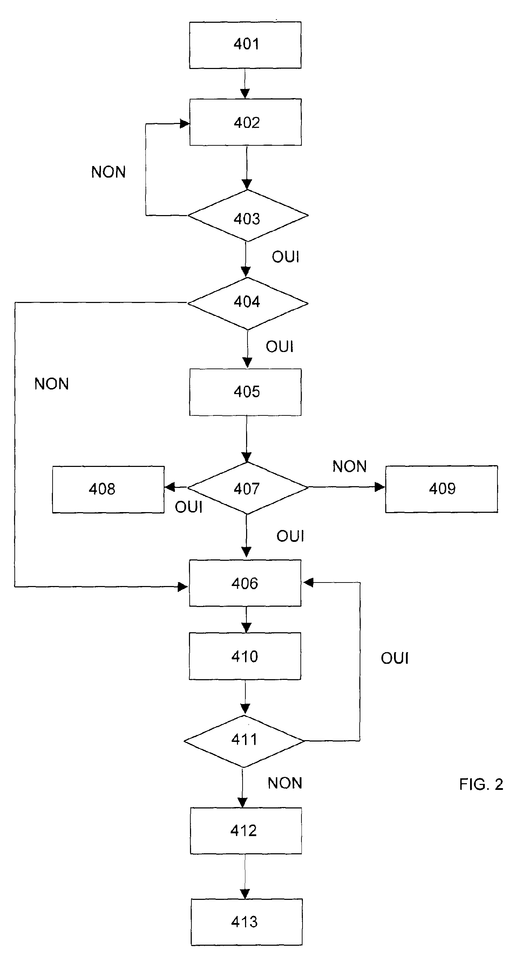

Le module (21) d'authentification comprend également des moyens de gestion de la connexion de chaque terminal (1) enregistré auprès du serveur (2). Ces moyens de gestion seront décrits ultérieurement en référence à la figure 2.

Le serveur (2) comprend un deuxième module (22), dit d'interface graphique. Ce module (22) d'interface comprend des moyens d'envoi d'écrans de dialogue vers les terminaux ayant établi une connexion avec le serveur. Dans une autre variante de réalisation, les écrans de dialogue peuvent être complétés ou remplacés par des messages vocaux. Les écrans de dialogue et/ou les messages vocaux sont envoyés par le module (21) de gestion des communications vers les terminaux ayant établi une connexion avec le serveur (2). Les messages vocaux sont envoyés vers les terminaux sur des moyens de restitution du son du terminal (1) assurant la reproduction des messages vocaux et pour guider l'utilisateur dans sa ou ses demandes de sélection. Les écrans de dialogue sont envoyés, pour afficher, sur des moyens (122) de visualisation du terminal (1), des écrans comprenant des fenêtres de sélection, des menus ou toute autre boîte de dialogue pour guider l'utilisateur dans sa ou ses commandes de sélection et, par exemple, pour permettre la procédure d'authentification du terminal (1) lors de la connexion au serveur (1). Le module (22) d'interface graphique comprend des moyens de traitement, soit des requêtes du terminal (1) lors de la procédure de sélection d'une sélection, soit des requêtes du module (21) d'authentification lors de la procédure d'authentification du terminal (1). En effet, pendant la procédure d'authentification, le module (21) d'authentification doit demander au terminal (1) de s'identifier afin d'autoriser l'accès du terminal au serveur. Cette demande est réalisée, par l'intermédiaire d'une requête envoyée par le module (21) d'authentification vers le terminal (1) au travers du module (20) de gestion des communications. La requête comprend une demande de l'identifiant et du mot de passe du terminal pour vérifier que le terminal qui tente de se connecter est bien enregistré, c'est-à-dire que son identifiant et son mot de passe sont bien contenus dans la base de données (210). Cette requête est envoyée vers le terminal (1), par l'intermédiaire d'un écran particulier généré par le module (22) d'interface graphique qui est alors activé par le module (21) d'authentification afin de transmettre l'écran d'authentification correspondant vers le terminal (1). Dans une autre variante, le module (21) d'authentification peut comprendre un sous-module générant cet écran et le transmettre au module (20) de gestion de communication pour envoi vers le terminal (1).

Le serveur (2) comprend un troisième module constituant une bibliothèque (23) de sélection de pièces audiovisuelles. Cette bibliothèque regroupe notamment toutes les sélections disponibles pour le téléchargement vers les terminaux (1). La bibliothèque (23) de sélection peut également comprendre des sélections qui ne sont pas encore disponibles pour le téléchargement. Ce cas se présente lorsque les sélections concernées n'ont pas fait l'objet d'accord pour leur diffusion et leur copie. En effet, selon l'invention, une sélection n'est mise à la disposition des terminaux que lorsque les autorisations de reproduction et de copie de tous les ayants droit sur cette sélection ont été obtenus. Ainsi, les sélections peuvent être mémorisées sous forme de base de données et un système de drapeau (flag) permet d'identifier qu'une sélection est disponible au téléchargement vers les terminaux. Pour chaque accord avec un ayant droit sur la diffusion ou la copie d'une sélection, un drapeau est utilisé indiquant si l'accord est obtenu. Lorsque tous les drapeaux indiquent que tous les accords sont obtenus, alors la sélection est disponible au téléchargement. Si au contraire un seul drapeau indique qu'un accord n'a pas été obtenu, alors la sélection n'est pas disponible au téléchargement tant que l'état de ce drapeau est maintenu.

Le serveur (2) comprend un quatrième module (24) dit de calcul de redevances. Ce module (24) comprend des moyens de collecte des informations envoyées et reçues de chaque terminal (1) concernant l'utilisation des sélections envoyées. Les informations collectées sont ensuite mémorisées sur des moyens de mémorisation du serveur. Le module (24) de calcul de redevances comprend également, par exemple dans une base de données, les éléments de calcul des redevances en fonction du nombre de copies et de diffusions de chaque sélection. Ces éléments de calcul sont notamment les taux de redevances réclamés par chaque ayant droit pour chaque utilisation de la sélection. Ainsi, pour une même sélection, le taux de redevances pour la reproduction peut être différent du taux de redevances pour la copie, lui-même différent du taux de redevance forfaitaire pour la copie d'une sélection en vue de sa reproduction illimitée. De même, comme expliqué précédemment, un taux de redevance peut être défini pour chaque autre droit existant sur la sélection. Afin d'exécuter le calcul à partir de ces éléments, le module (24) de calcul de redevances reçoit, par exemple du module (20) de gestion de communication, les informations sur l'envoi des sélections vers les terminaux (1). Dès qu'une sélection est transmise à un terminal (1), le module (20) de gestion de communication notifie les moyens de collecte du module (24) de calcul de redevances en indiquant si la sélection est envoyée pour une écoute en temps réel ou pour un stockage en vue d'une utilisation illimitée avec paiement forfaitaire ou pour toute autre utilisation donnant droit à un calcul de redevances. En effet, comme expliqué précédemment, si la sélection est uniquement écoutée en temps réel il n'y a pas en fonction de la législation en vigueur, de changement de support et donc seul les droits de reproduction sont dus. Si au contraire la sélection est transmise à un terminal (1) qui est autorisé à stocker les sélections transmises, alors des droits de copie sont dus. Dans un autre exemple, si la sélection est destinée à une restitution dans un lieu public, des droits ("performance right") sont également dus.

De même, lorsque chaque terminal (1) reçoit, en vue de son stockage, une sélection envoyée par le serveur (2), pendant chaque connexion au serveur (2), des informations déterminent le nombre de fois que la sélection reçue sur le terminal (1) a été jouée. Lorsque le module (20) de gestion reçoit ces informations, il les notifie au moyen de collecte d'informations du module (24) de calcul de redevance qui peut alors effectuer le calcul exact des redevances à verser pour chacun des ayants droit en fonction des éléments de calcul mémorisés dans la base de données. Dans le cas où les redevances pour le stockage et la restitution sont dues sous forme forfaitaire, les informations déterminant le nombre de fois que la sélection reçue sur le terminal (1) a été jouée sont malgré tout demandées et mémorisées dans un but informatif explicité ultérieurement.

Chaque terminal (1) selon l'invention est organisé autour d'un dispositif (10) à microprocesseur. Ce dispositif (10) comprend une pluralité de circuits (11, 12, 13, 14) de contrôle permettant de gérer, notamment, la communication avec le serveur, le choix et la commande de sélections, l'écoute en temps réel, la mémorisation des sélections et la restitution des sélections mémorisées. Un premier circuit (11) de contrôle constitue l'interface de communication avec la liaison (3) de communication avec le serveur (2). Ce premier circuit (11) de contrôle peut être adapté à une liaison, soit téléphonique, soit par satellite, soit par câble. La fonction de ce premier circuit (11) est sensiblement la même que celle du module de gestion du serveur, mais du côté terminal (1). En effet, le premier circuit (11) de contrôle comprend des moyens de transcription, soit pour mettre en forme les données (A) arrivant sur la liaison (3) pour qu'elles soient traitées par le dispositif à microprocesseur, soit pour mettre en forme les données envoyées (B) par le terminal (1) vers le serveur (2).

Le deuxième circuit (12) de contrôle comprend des moyens d'interface entre l'utilisateur et le terminal (1). Ces moyens d'interface comprennent essentiellement des moyens (122) de visualisation et des moyens (121) de sélection. Les moyens de visualisation (122) comprennent, par exemple, un moniteur ou un écran à cristaux liquides. Les moyens (121) de sélection comprennent, par exemple, un pointeur, tel qu'une souris, ou un écran tactile, ou un système de commande vocale ou un dispositif de commande à distance par radiofréquence ou infrarouge. Ces moyens d'interface permettent de reproduire des messages vocaux dans le cas d'un système de commande vocale ou d'afficher les écrans d'aide à la sélection générés par le module (22) d'interface graphique et envoyés ensuite sur la liaison (3) de communication. Les moyens (121) de sélection permettent à l'utilisateur de définir, puis valider ses choix de sélection, ou de répondre à des requêtes du serveur (2), par exemple lors de la procédure d'authentification du terminal (1), ceci de façon manuelle par écran tactile ou clavier ou à distance, par exemple par la voix lorsque le système est à commande vocale.

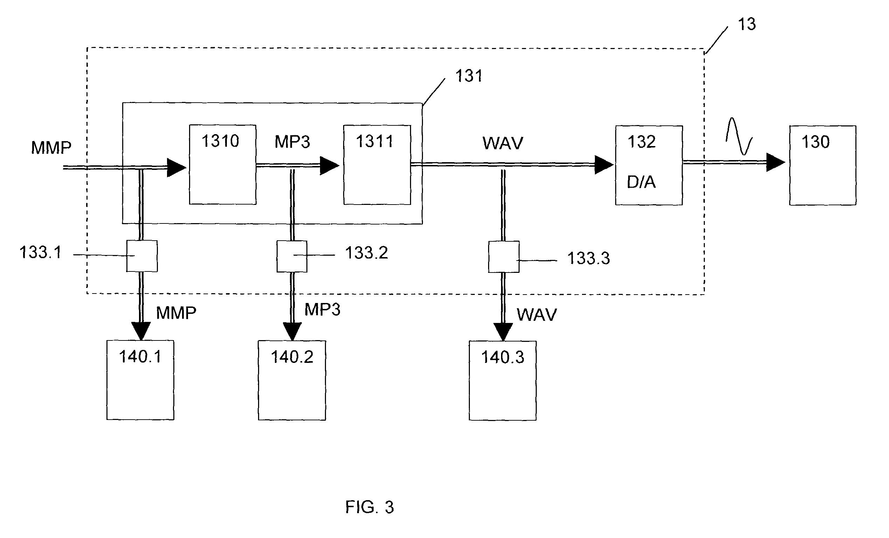

Un troisième circuit (13) comprend des moyens de restitution des sélections. Lorsque les sélections sont des pièces musicales, le troisième circuit (13) est connecté à un dispositif (130) d'amplification du son. Un exemple de réalisation du troisième circuit (13) est représenté à la figure 3. Selon cette variante, le troisième circuit (13) est élaboré autour d'un processeur (131) de traitement de signaux noté par la suite DSP (en anglais: Digital Signal Processor). Le DSP reçoit sur son entrée le flot d'informations audiovisuelles correspondant à une sélection. Ces informations audiovisuelles sont des données numériques compressées ou encodées et éventuellement cryptées. Selon la variante de réalisation, les données sont encodées au format MP3, puis cryptées dans un format propriétaire MMP. Les données au format MMP sont tout d'abord décryptées par un module de décryptage (1310, fig. 3) pour obtenir un flux de données numériques au format MP3. Ce flux de données est appliqué à l'entrée d'un module (1311) de décodage permettant d'obtenir sur sa sortie un flux de données décompressées dans un format numérique standard, tel que le format WAV. Ce flux de données au format WAV est alors appliqué à l'entrée d'un convertisseur (132) numérique analogique pour être envoyé vers le dispositif (130) d'amplification sonore. Le module (1310) de décryptage et le module (1311) de décodage peuvent être exclusivement de type logiciel ou de type matériel et logiciel (en anglais firmware).

Comme expliqué précédemment, une sélection chargée à distance peut être, soit jouée et mémorisée pour être rejouée, soit uniquement jouée en temps réel. Dans ce dernier cas le flux de données ne doit en aucun cas être accessible à l'utilisateur. En d'autres termes les données numériques ne doivent pas être mémorisées. Par contre, dans le premier cas, les données numériques peuvent être mémorisées. Ainsi, le DSP comprend au moins une commande (133.1, 133.2, 133.3) d'accès à des moyens (140.1, 140.2, 140.3) de mémorisation du terminal (1). Cette commande (133.1, 13.2, 133.3) d'accès permet ou non le transfert du flux de données dans l'un des trois formats MMP, MP3, WAV vers une zone (140.1, 140.2, 140.3) des moyens (140) de mémorisation du terminal (1). Selon une première variante de réalisation, chaque terminal est configuré lors de la procédure d'enregistrement auprès du serveur (2) pour une utilisation déterminée et l'une des commandes est validée pour autoriser le type d'utilisation prévu.

Dans un deuxième mode de réalisation, le terminal est évolutif et son mode d'utilisation peut être adapté en cours de route. Dans ce cas, le serveur (2) envoie en même temps que les informations audiovisuelles, les informations permettant de valider le fonctionnement selon l'un des trois types d'utilisation définis plus haut.

Dans un dernier mode de réalisation, lorsque l'utilisation prévue sur le terminal ne comprend pas le stockage des informations audiovisuelles transmises, aucune des commandes (133.1, 133.2, 133.3) n'est validée, ce qui interdit toute mémorisation des données audiovisuelles sur les moyens de mémorisation du terminal (1).

Ainsi, une première commande (133.1) d'accès est envoyée sur une liaison située entre l'amont du module (1310) de décryptage et les moyens (140.1) de mémorisation. Cette première commande (133.1) d'accès permet ou non la mémorisation d'une sélection dans le format encodé et crypté MMP. Un deuxième type de commande (133.2) d'accès est envoyé sur une liaison dont une première extrémité est connectée entre le module (1310) de décryptage et le module (1311) de décodage et dont la deuxième extrémité est connectée aux moyens (140.2) de mémorisation du terminal (1). Ainsi, ce deuxième type de commande (133.2) d'accès permet ou non la mémorisation d'une sélection dans le format encodé MP3. Enfin, un troisième type de commande (133.3) d'accès est envoyé sur une liaison dont une première extrémité est placée entre le module (1311) de décodage et le convertisseur (132) numérique analogique et dont la deuxième extrémité est connectée aux moyens (140.3) de mémorisation du terminal (1). Ainsi, ce troisième type de commande (133.3) d'accès permet ou non la mémorisation d'une sélection dans le format numérique décompressé WAV.

Afin d'assurer une meilleure protection contre la fraude et notamment contre la copie illégale de pièces musicales, la commande d'accès préférée est la première. En effet, en supprimant la deuxième et la troisième commandes d'accès, le seul format disponible pour la mémorisation est le format MMP. Ce format étant à la fois crypté et encodé, il rend inexploitable les données mémorisées sans les algorithmes de décryptage et de décodage.

La protection des données numériques transférées vers le terminal (1) peut être réalisée par tout autre moyen complémentaire ou équivalent à un encodage et/ou un cryptage.

Le quatrième circuit (14) gère les moyens (140) de mémorisation. Ces moyens (140) de mémorisation peuvent être du type disque dur, mémoire amovible (mémoire flash, disquette, cd-rom) ou tout autre type de mémoire à semi-conducteur, magnétique ou optique.

Selon l'invention, le terminal (1) peut être, soit un matériel dédié, c'est-à-dire spécialement conçu pour dialoguer avec le serveur (2), soit un matériel standard.

Lorsque le terminal (1) est dédié, le DSP (13) intègre à la fois des éléments matériels et logiciels pour le décryptage et le décodage du flux de données provenant du serveur (2). De même, l'identifiant et le mot de passe sont, par exemple, mémorisés à l'avance dans la base de données (210) du module (21) d'authentification.

Lorsque le terminal (1) est standard, il doit recevoir, par l'intermédiaire du premier circuit de contrôle de la liaison (3), un certain nombre d'éléments logiciels envoyés, par exemple par le serveur, par exemple lors de la procédure d'enregistrement, avant de pouvoir se connecter au serveur (2) et utiliser les données transmises par le serveur (2). De même, l'utilisateur du terminal (1) doit posséder un identifiant et un mot de passe pour être identifié par le serveur (2) lors de sa connexion. En effet, comme expliqué précédemment, l'utilisateur doit préciser quelle sera l'utilisation des sélections sur le terminal (1) afin que le module (21) d'authentification affecte le code ou la clé qui convient pour identifier cette utilisation.

Ces éléments logiciels envoyés, par exemple, par le serveur, comprennent une configuration du terminal (1) pour autoriser le dialogue entre le module (20) de gestion de communication et le premier circuit (11) de façon à permettre, notamment, le traitement des informations représentatives de l'affichage des écrans sur les moyens (122) de visualisation du terminal (1). Deuxièmement, ces éléments logiciels comprennent, lorsque cela est nécessaire, des moyens de décrypter et/ou décoder les informations audiovisuelles transmises par le serveur (2). Troisièmement, ces éléments logiciels comprennent, lorsque le terminal (1) est autorisé à stocker les données correspondant aux sélections, des moyens de conserver une trace de toutes les exécutions postérieures des sélections mémorisées sur le terminal (1). Ces moyens de conserver une trace d'exécution des sélections comprennent des moyens de création et de mise à jour, par exemple d'un fichier de compte rendu (en anglais: log file) contenant le nombre de fois que chaque sélection contenue sur le terminal a été exécutée ainsi que, par exemple, la date à laquelle les exécutions ont eu lieu.

Dans la variante de réalisation représentée à la figure 1B, l'échange d'informations entre le serveur (2) et les terminaux (1.1.1 à 1.n.n₃) est réalisé par l'intermédiaire d'au moins un serveur (4.1 à 4.n), dit multiservice.

Les terminaux (1.1.1 à 1.n.n₃) représentés comprennent au moins des éléments réalisant les fonctions essentielles d'un terminal tel que décrit précédemment en référence à la figure 1A.

L'architecture représentée à la figure 1B se présente lorsque les terminaux (1.1.1 à 1.n.n₃) sont déjà connectés à un serveur (40.1 à 40.n) multiservice. A titre d'exemple, un premier serveur (4.1) multiservice comprend un système de distribution de programmes de télévision par câble comprenant une voie de retour. Dans ce cas, les terminaux (1.1.1 à 1.1.n₁) peuvent être constitués du décodeur couplé à une télévision et à des moyens de sélection appropriés. Un deuxième serveur (4.2) multiservice est constitué par un opérateur de téléphonie cellulaire. Dans ce cas, les terminaux (1.2.1 à 1.2.n₂) peuvent être constitués du téléphone cellulaire. Les moyens de sélection sont constitués, par exemple, du clavier ou d'un système de commande vocale.

Le protocole de communication entre chaque terminal (1.1.1 à 1.n.n₃) et son serveur (4.1 à 4.n) multiservice associé pour permettre la sélection et la réception de pièces audiovisuelles mémorisées sur le serveur (2) est géré par le serveur (4.1 à 4.n) multiservice par l'intermédiaire d'une interface (41.1 à 41.n) spécifique à chaque liaison de communication (51.1 à 51.n) entre un serveur (4.1 à 4.n) et les terminaux (1.1.1 à 1.n.n₃) associés. Les liaisons de communication (51.1 à 51.n) entre un serveur (4.1 à 4.n) et les terminaux (1.1.1 à 1.n.n₃) associés sont bidirectionnelles.

La liaison (502.1 à 502.n) de communication entre le serveur (2) et chaque serveur (4.1 à 4.n) multiservice est bidirectionnelle et, préférentiellement, est une liaison haute vitesse.

Le serveur (2) comprend alors un module de gestion (20.1 à 20.n) pour chaque liaison (51.1 à 51.n) avec un serveur (4.1 à 4.n) multiservice dans la mesure où cette liaison nécessite un protocole de communication spécifique. De même, chaque serveur (4.1 à 4.n) multiservice est équipé d'une interface (40.1 à 40.n), notamment matérielle et logicielle, de communication avec le serveur (2).

Le fonctionnement du dispositif est sensiblement identique à celui du dispositif décrit en référence à la figure 1A, hormis le fait que les requêtes envoyées par le serveur (2) à destination du terminal sont traduites par le serveur (4.1 à 4.n) multiservice associé au terminal en concordance avec le protocole de communication entre le serveur (4.1 à 4.n) multiservice et le terminal (1.1.1 à 1.n.n₃). Afin d'accélérer, le traitement des demandes des terminaux et le dialogue entre le serveur (2) et les terminaux (1.1.1 à 1.n.n₃), certains modules ou parties de modules peuvent être déporté sur le serveur (4.1 à 4.n) multiservice associé au terminal. Ainsi, la procédure d'enregistrement d'un terminal peut être gérée au moins en partie par un module spécifique du serveur (4.1 à 4.n) multiservice associé au terminal. En effet, pour la plupart des serveurs (4.1 à 4.n) multiservices, chaque terminal est déjà enregistré pour un service particulier du serveur (4.1 à 4.n) multiservice. Le terminal possède donc une identification unique auprès du serveur (4.1 à 4.n) multiservice. Cette identification peut être conservée pour permettre l'accès au service de distribution de sélections audiovisuelles du serveur (2).

De même, le module graphique du serveur (2) peut être déporté sur chaque serveur (4.1 à 4.n) multiservice. En effet, chaque serveur (4.1 à 4.n) multiservice peut posséder le même type de module pour présenter ses propres services. Il suffit donc d'ajouter les fonctionnalités décrites précédemment dans ce module.

Ainsi, lorsqu'un terminal (1.1.1 à 1.n.n₃) enregistré auprès de son serveur (4.1 à 4.n) multiservice associé pour le service de distribution de sélections audiovisuelles souhaite accéder à ce service, dans un premier temps, il s'authentifie auprès de son serveur (4.1 à 4.n) multiservice. Ensuite, il notifie, par exemple, l'envoi d'une requête ou la validation d'une commande, à son serveur (4.1 à 4.n) multiservice. Le serveur (4.1 à 4.n) multiservice vérifie, à partir de l'identifiant fourni par le terminal, que ce dernier peut accéder au service du serveur (2). Dans l'affirmative, le serveur (4.1 à 4.n) multiservice envoie une requête vers le serveur (2) par l'intermédiaire de l'interface de communication (40.1). Sur réception de cette requête, le serveur (2) envoie, par l'intermédiaire d'un module de communication (20.1) avec le serveur (4.1 à 4.n) multiservice respectif, les informations nécessaires vers le serveur (4.1 à 4.n) multiservice pour que ce dernier transmette les écrans de dialogue vers le terminal afin de permettre le choix et la validation du choix d'au moins une sélection audiovisuelle. Lorsque le choix est validé, les données audiovisuelles correspondant à la sélection choisie sont transmises par le serveur (2) vers le terminal, via le serveur (4.1 à 4.n) multiservice associé. Lors de cette transmission, le format des données audiovisuelles correspondant à la sélection choisie peut être modifié par le serveur (4.1 à 4.n) multiservice associé pour que le format soit compatible avec le protocole de communication entre le terminal et le serveur (4.1 à 4.n) multiservice associé. Dans le cadre de cet exemple de réalisation, le serveur multiservice (4.1 à 4.n) peut se comporter comme un terminal vis-à-vis du serveur (2).

Ainsi par exemple, le serveur multiservice (4.1 à 4.n) peut gérer des stations d'écoute ou bien un dispositif de musique d'ambiance. Dans cette variante, le serveur multiservice (4.1 à 4.n) est identifié auprès du serveur pour prendre en compte les utilisations qui seront faites par les stations d'écoute et la reproduction des sélections comme musique d'ambiance.

Ainsi dans ce cas et comme décrit précédemment, une trace, par exemple, sous la forme d'un fichier de compte-rendu, est implémentée sur le serveur multiservice et est mise à jour à chaque utilisation d'une sélection mémorisée sur le serveur. Par conséquent, lorsqu'une sélection musicale est jouée dans le cadre d'une musique d'ambiance, elle doit donner lieu au paiement de droits spécifiques. Pour ce faire, le fichier de compte-rendu mémorise cette utilisation. Ainsi lorsque les informations contenues dans le fichier de compte-rendu sont transmises au serveur (2), les droits correspondants à une reproduction en public peuvent être calculés en vue d'être payés.

De même, une station d'écoute peut permettre une reproduction publique de la sélection. Dans ce cas, le fichier compte-rendu mémorise la reproduction de chaque sélection pour pouvoir calculer les droits correspondants.

Le fonctionnement du dispositif selon l'invention va à présent être décrit en référence au logigramme de la figure 2. Ce logigramme représente la succession des opérations intervenant lors d'une connexion entre le terminal (1) et le serveur (2). Comme expliqué précédemment, la première connexion d'un terminal (1) est précédée d'une procédure d'enregistrement au cours de laquelle le terminal (1) est identifié auprès du serveur et le terminal reçoit, le cas échéant, des éléments logiciels permettant le dialogue terminal/serveur et l'exploitation des données transmises par le serveur (2).

Dans une première étape (401), la liaison entre le terminal et le serveur est initialisée. Cette initialisation correspond, notamment, à la connexion entre le module (20) de gestion du serveur et le premier circuit (11) du terminal. Ensuite intervient une étape de demande d'authentification (402). Dans cette étape, le serveur (2), par l'intermédiaire du module (21) d'authentification, envoie une requête vers le terminal pour demander son identifiant et son mot de passe. La réception de cette requête se traduit sur le terminal (1), par exemple par l'affichage d'un écran d'accueil généré par le module (22) d'interface graphique du serveur (2) ou par un module graphique du terminal comprenant une première zone de saisie pour l'identifiant et une deuxième zone de saisie pour le mot de passe. L'utilisateur saisit l'identifiant et le mot de passe qui lui ont été affectés lors de la procédure d'enregistrement, puis valide sa saisie. Cette validation permet l'envoi d'une réponse à la requête envoyée par le serveur. Cette étape de demande d'authentification peut être automatique lorsque l'identifiant et le mot de passe sont mémorisés sur le terminal (1). Dès que la requête de demande d'authentification est reçue par le terminal, l'identifiant et le mot de passe sont retournés au serveur sans affichage particulier;

Ensuite une troisième étape (403) de vérification est réalisée au niveau du serveur (2). Cette étape consiste à vérifier si l'identifiant et le mot de passe correspondent à un terminal enregistré. Dans la négative, soit une nouvelle requête de demande d'identification est envoyée au terminal soit la connexion entre le serveur et le terminal est interrompue sur l'initiative du serveur. Dans l'affirmative, le module (21) d'authentification vérifie dans une quatrième étape (404), le statut défini pour le terminal (1), à savoir si le terminal est autorisé à mémoriser des sélections ou si le terminal est seulement autorisé à exécuter une sélection en temps réel ou encore si le terminal est autorisé à exécuter un nombre illimité de fois une sélection préalablement mémorisée. Si le terminal est autorisé à mémoriser une requête de demande du fichier de compte rendu est envoyée au terminal dans une cinquième étape (405). Si le terminal n'est pas autorisé à mémoriser les sélections, une sixième étape (406) dite de choix de sélection, est déclenchée. Bien sûr, lorsque d'autres utilisations d'une sélection sont possibles sur le terminal (1), une information correspondante est contenue dans le module d'authentification.

Lorsqu'un terminal (1) autorisé à mémoriser reçoit la requête de demande du fichier de compte rendu, il envoie au serveur le contenu du fichier de compte rendu si celui-ci contient des informations, puis vide le fichier. Si le fichier de compte rendu est vide, le terminal envoie un message indiquant que le fichier est vide. Si après un délai déterminé, le serveur ne reçoit pas de réponse, alors il interrompt la connexion avec le terminal dans une huitième étape ou renouvelle sa requête. Si le serveur reçoit une réponse, le module (20) de gestion de communication, d'une part déclenche la sixième étape (406) de choix de sélection et d'autre part vérifie si cette réponse contient des informations sur l'exécution des sélections mémorisées sur le terminal. Dans l'affirmative, le module (20) de gestion notifie les données reçues, dans une neuvième étape (409), au module (24) de calcul de redevances pour mettre à jour sa base de données pour le calcul de redevances.

L'étape de choix de sélection (406) consiste en fait à envoyer vers le terminal des écrans de dialogue générés par le module (22) d'interface graphique ou encore des messages vocaux. Ces écrans comprennent notamment la liste des sélections disponibles lues par le module (22) d'interface graphique dans la bibliothèque (23) de sélection. Compte tenu du nombre de sélections possibles, celles-ci peuvent être classées par style, par préférence, par date de disponibilité ou par fréquence de commande. Le choix d'une sélection est, par exemple, validé par l'intermédiaire d'un écran de validation. La validation de la sélection provoque une dixième étape (410) dans laquelle la sélection est placée dans un fichier constituant la liste des sélections commandées par l'utilisateur du terminal. Après validation d'une sélection, un écran est envoyé par le serveur, dans une onzième étape, pour déterminer si un nouveau choix de sélection est souhaité. Dans l'affirmative les sixième (406), dixième (410) et onzième (411) étapes sont exécutées de nouveau. Dans la négative, les informations contenues dans le fichier constituant la liste des sélections commandées sont envoyées, dans une douzième étape (412), vers le terminal. Sur réception de ces informations, le serveur (2) prépare, dans une treizième étape (413), l'envoi des données numériques correspondant aux sélections de la liste. Cette préparation dépend du type de terminal (1), c'est-à-dire si le terminal est autorisé ou non à mémoriser les informations transmises. Si le terminal est autorisé à mémoriser, avant d'envoyer les sélections choisies, le module (20) de gestion de communication du serveur (2) notifie le module (24) de calcul de redevances pour prendre en compte les droits de copie dus pour le téléchargement de chaque sélection de la liste. Si le terminal n'est pas autorisé à mémoriser les sélections, c'est-à-dire que le terminal ne permet que l'écoute en temps réel des sélections, le module (20) de gestion de communication du serveur (2) notifie le module (24) de calcul de redevances pour prendre en compte les droits de reproduction de chaque sélection de la liste des sélections commandées et éventuellement des droits de copie en fonction des législations en vigueur.

A l'issue de l'envoi des données numériques correspondant aux sélections commandées vers le terminal demandeur, un écran généré par le module (22) d'interface graphique peut être envoyé vers le terminal (1) pour permettre à l'utilisateur, soit de commander de nouveau au moins une sélection et donc d'exécuter de nouveau le processus à partir de l'étape de sélection, soit de mettre fin à la connexion avec le serveur (2).

Afin d'accroître la sécurité du dispositif vis-à-vis des copies ou reproductions illégales, le procédé de cryptage intègre au moins deux clés de cryptage. Lors de l'enregistrement d'un terminal, celui-ci reçoit les deux clés qui ne sont pas connues de l'utilisateur.

Une première clé de cryptage est identique pour tout envoi vers tous les terminaux et permet d'identifier la source des données, c'est-à-dire le serveur (2). Par contre, la deuxième clé est spécifique, non seulement au terminal mais également au type d'utilisation qui est faite des sélections. Ainsi, un terminal qui n'est pas autorisé à stocker les données numériques représentatives des sélections disposera d'une clé qui ne lui permettra pas de décrypter les données numériques destinées à un terminal autorisé à mémoriser les données numériques disposant d'une clé permettant l'autre type d'utilisation. De même, la deuxième clé de cryptage est différente lorsque la sélection doit être restituée dans un lieu public ou si elle fait l'objet d'un paiement forfaitaire des redevances.

Les éléments logiciels installés sur le terminal (1) peuvent comprendre des moyens de collecte d'informations statistiques, par exemple, sur l'utilisation des sélections mémorisées sur le terminal (1) ou sur le mode et les périodes de la journée pendant lesquelles les connexions au serveur sont réalisées. Ces moyens de collecte comprennent des moyens de mémorisation des informations statistiques dans un fichier de compte rendu des moyens de mémorisation du terminal. Les moyens de collecte comprennent des moyens de transmission des informations contenues dans ce fichier vers le serveur (2) lors d'une connexion du terminal sur le serveur (2). Ainsi, des informations telles que la date à laquelle les sélections sont rejouées, l'ordre dans lequel les sélections sont choisies, la durée de connexion, peuvent être mémorisées puis envoyées vers le serveur (2) pour être ensuite exploitées à des fins commerciales. De même, lors de l'enregistrement du terminal (1), des informations sur le profil du ou des utilisateurs peuvent être relevées afin de compléter les relevés statistiques.

Ainsi, notamment, les informations collectées par le serveur (2) et représentant l'utilisation des sélections envoyées vers le terminal peuvent être croisées avec le profil de l'utilisateur ou tout autre paramètre statistique en vue de réaliser, par exemple, une étude de marché.

Le dispositif selon l'invention intègre également des moyens de paiement des commandes de sélection. Ces moyens de paiement peuvent être physiquement présents sur le terminal et/ou intégrés dans le processus de communication entre le terminal et le serveur. Dans les deux cas, le paiement des sélections peut intervenir à plusieurs moments.

Pour des raisons de simplification on appelle par la suite « crédit » la somme nécessaire pour commander une sélection. Dans une première variante, le ou les crédits peuvent être pré-payés. En d'autres termes, chaque terminal comprend un compte de crédit mémorisé sur la base de données et administré par un module spécifique du serveur (2). Ce compte est crédité par le module spécifique chaque fois que l'utilisateur du terminal associé au compte le souhaite. Cette modification peut être prise en compte par le module (22) d'interface graphique au travers d'un jeu d'écrans spécifiques au télépaiement.

Le compte est débité d'un crédit par le module spécifique, chaque fois qu'une sélection est validée par l'utilisateur du terminal (1).

Le deuxième mode de paiement peut être le paiement à chaque sélection. Dans ce cas, le paiement est réalisé pendant la connexion entre le serveur et le terminal. Ainsi, à des instants déterminés de la connexion , le module (22) d'interface envoie un jeu d'écrans spécifiques, soit pour le télépaiement, soit pour le paiement par l'intermédiaire des moyens de paiement du terminal. Dans ce cas, tant que la procédure de paiement n'est pas validée par un module de paiement du serveur ou tant que la somme versée ne correspond pas au nombre de crédits nécessaires pour le paiement des sélections commandées, l'envoi des sélections n'est pas déclenché.

Le troisième mode de paiement est basé sur un paiement périodique pour la commande de sélections. Dans ce mode de paiement, chaque fois qu'une chanson est envoyée vers un terminal (1), un module de paiement du serveur met à jour un compte associé au terminal. Ensuite, périodiquement, le module de paiement du serveur édite une facture qui est envoyée à l'utilisateur du terminal (1) associé au compte pour solder le compte. Dans ce mode de paiement, la procédure d'authentification peut être complétée par une procédure de vérification des créances, déclenchée par le module de paiement. Si une créance n'est pas payée, le module de paiement notifie le module (21) d'interface graphique pour générer un écran rappelant l'état des créances. Cet écran est alors transmis au terminal par le module de gestion des communications du serveur, pour être affiché sur les moyens de visualisation du terminal. L'écran comprend, par exemple, un rappel de l'état des créances et une invitation à régulariser la situation. Ensuite, le serveur, soit déclenche la poursuite de la procédure de commande, soit interrompt la connexion avec le terminal.

Comme expliqué précédemment, le paiement peut intervenir à différents moments dans la procédure de communication entre le serveur et le terminal. Ainsi, le paiement peut être demandé avant l'étape de sélection (406). Dans ce cas l'utilisateur du terminal est invité, par l'intermédiaire d'un écran affiché, à indiquer combien de crédit il veut obtenir ou combien de sélections il souhaite réaliser. Dans une autre variante, l'utilisateur du terminal est invité, par l'intermédiaire d'un écran, à payer la somme d'argent qu'il souhaite et le serveur (2), sur réception de l'information correspondant à cette somme, renvoie le nombre de crédits alloués.

Le paiement peut intervenir soit après chaque sélection, avant la mise à jour du fichier constituant la liste des chansons commandées, soit après la validation du choix de la dernière sélection, avant l'envoi des informations contenues dans le fichier constituant la liste des sélections commandées.

Ainsi, le procédé de distribution d'informations audiovisuelles selon l'invention se caractérise en ce qu'il comprend :
- une étape d'enregistrement de chaque terminal auprès du serveur pour identifier de façon unique le terminal et enregistrer le type de terminal ;
- une étape (402) d'authentification du terminal par le serveur lors de chaque connexion du terminal au serveur ;
- une étape (413) de téléchargement d'au moins une sélection d'informations audiovisuelles choisies (406) par l'utilisateur du terminal pendant sa connexion au serveur, le format dans lequel sont transmises les sélections d'informations audiovisuelles étant tel que seul le terminal destinataire peut les exploiter ;
- une étape de mémorisation de l'utilisation de chaque sélection d'informations audiovisuelles dans une base de données du serveur.

Dans un autre mode de réalisation, l'utilisation d'une sélection d'informations audiovisuelles comprend, soit l'exécution en temps réel des informations audiovisuelles sur le terminal destinataire, soit la mémorisation des informations audiovisuelles en vue de leur exécution sur le terminal destinataire, soit l'exécution en temps réel des informations audiovisuelles après mémorisation des informations audiovisuelles sur le terminal destinataire.

Dans un autre mode de réalisation, l'étape (402) d'authentification comprend une étape (407) d'envoi par le terminal (1) des informations mémorisées concernant les utilisations souhaitées des informations audiovisuelles téléchargées sur le terminal (1).

Dans un autre mode de réalisation, le procédé comprend une étape de traitement par le serveur des informations mémorisées ou reçues concernant les utilisations des informations audiovisuelles téléchargées sur le terminal (1) pour déterminer les montants des redevances à verser à chacun des ayants droit sur les informations audiovisuelles.

Dans un autre mode de réalisation, l'étape d'enregistrement comprend une étape d'envoi de moyens de décodage et/ou de décryptage en fonction du format dans lequel les informations audiovisuelles seront transmises au terminal et correspondant aux utilisations définies.

Dans un autre mode de réalisation, le type de terminal définit l'utilisation des informations audiovisuelles qui sera effectuée sur le terminal.

Dans un autre mode de réalisation, le procédé comprend une étape de paiement des sélections commandées, soit pendant l'étape d'authentification, soit pendant le choix de l'utilisateur, soit avant l'étape de téléchargement.

Dans un autre mode de réalisation, le procédé comprend une étape de mémorisation sur le terminal des relevés statistiques sur l'utilisation des sélections mémorisées par ce dernier et une étape d'envoi, par le terminal, des informations correspondant aux relevés statistiques pendant une connexion entre le terminal et le serveur.

De même, le dispositif de distribution d'informations audiovisuelles selon l'invention se caractérise en ce que les moyens de mémorisation du serveur (2) comprennent une identification de chaque terminal définissant l'utilisation des informations audiovisuelles transmises au terminal, chaque terminal (1) comprend des moyens interactifs avec l'utilisateur pour permettre le choix (121, 122) d'au moins une sélection au travers de la liaison (3) de communication avec le serveur (2) et des moyens (13, 130) d'exécution des informations envoyées par le serveur (2) et représentatives d'une sélection audiovisuelle.

Dans un autre mode de réalisation, les moyens d'exécution comprennent des moyens d'exécuter en temps réel sur le terminal les informations audiovisuelles envoyées par le serveur (2).

Dans un autre mode de réalisation, les moyens d'exécution du terminal comprennent des moyens (133.1, 133.2, 133.3) d'interdire la réutilisation des informations audiovisuelles envoyées.

Dans un autre mode de réalisation, les moyens d'exécution du terminal comprennent des moyens de mémorisation des informations audiovisuelles envoyées.

Dans un autre mode de réalisation, le terminal comprend des moyens d'enregistrement d'informations relatives à l'utilisation des sélections envoyées par le serveur vers le terminal.

Dans un autre mode de réalisation, le serveur comprend des moyens de calcul des redevances à verser à chacun des ayants droit sur l'utilisation des sélections envoyées aux terminaux, à partir des informations enregistrées par le serveur et transmises par chaque terminal concernant l'utilisation des sélections.

Dans un autre mode de réalisation, les moyens d'exploitation comprennent un processeur de traitement de signaux digitaux (DSP) comprenant des moyens de décodage des informations audiovisuelles transmises par le serveur pour obtenir des informations numériques, un convertisseur numérique analogique, au moins une sortie d'informations numériques vers des moyens de mémorisation et des moyens de commande de chaque sortie numérique pour autoriser ou non le stockage des informations numérique.

Dans un autre mode de réalisation, les moyens (121, 122) interactifs du terminal (1) comprennent des moyens de sélection comportant un pointeur et/ou un écran tactile associé à des moyens de visualisation assurant l'affichage d'une pluralité d'écrans de dialogue, et/ou un système à commande vocale associé à des moyens de restitution sonore assurant la reproduction de messages vocaux.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé de distribution d'informations audiovisuelles entre un serveur (2) et au moins un terminal (1) relié par des moyens (3) de communication bi-directionnels au serveur **caractérisé en ce que** le procédé comprend :
- une étape d'enregistrement de chaque terminal auprès du serveur pour identifier de façon unique le terminal et enregistrer le type de terminal ;
- une étape (402) d'authentification du terminal par le serveur lors de chaque connexion du terminal au serveur ;
- une étape (413) de téléchargement d'au moins une sélection d'informations audiovisuelles choisies (406) par l'utilisateur du terminal pendant sa connexion au serveur, le format dans lequel sont transmises les sélections d'informations audiovisuelles étant tel que seul le terminal destinataire peut les exploiter ;
- une étape de mémorisation de l'utilisation de chaque sélection d'informations audiovisuelles dans une base de données du serveur.

2. Procédé de distribution d'informations audiovisuelles selon la revendication 1, **caractérisé en ce que** l'utilisation d'une sélection d'informations audiovisuelles comprend, soit l'exécution en temps réel des informations audiovisuelles sur le terminal destinataire, soit la mémorisation des informations audiovisuelles en vue de leur exécution sur le terminal destinataire, soit l'exécution en temps réel des informations audiovisuelles après mémorisation des informations audiovisuelles sur le terminal destinataire.

3. Procédé de distribution d'informations audiovisuelles selon la revendication 1 ou 2, **caractérisé en ce que** l'étape (402) d'authentification comprend une étape (407) d'envoi par le terminal (1) des informations mémorisées concernant les utilisations souhaitées des informations audiovisuelles téléchargées sur le terminal (1).

4. Procédé de distribution d'informations audiovisuelles selon la revendication 3, **caractérisé en ce qu'**il comprend une étape de traitement par le serveur des informations mémorisées ou reçues concernant les utilisations des informations audiovisuelles téléchargées sur le terminal (1) pour déterminer les montants des redevances à verser à chacun des ayants droit sur les informations audiovisuelles.

5. Procédé de distribution d'informations audiovisuelles selon l'une des revendications 1 à 4, **caractérisé en ce que** l'étape d'enregistrement comprend une étape d'envoi de moyens de décodage et/ou de décryptage en fonction du format dans lequel les informations audiovisuelles seront transmises au terminal et correspondant aux utilisations définies.

6. Procédé de distribution d'informations audiovisuelles selon l'une des revendications 1 à 5, **caractérisé en ce que** le type de terminal définit l'utilisation des informations audiovisuelles qui sera effectuée sur le terminal.

7. Procédé de distribution d'informations audiovisuelles selon l'une des revendications 1 à 6, **caractérisé en ce qu'**il comprend une étape de paiement des sélections commandées, soit pendant l'étape d'authentification, soit pendant le choix de l'utilisateur, soit avant l'étape de téléchargement.

8. Procédé de distribution d'informations audiovisuelles selon l'une des revendications 1 à 7, **caractérisé en ce qu'**il comprend une étape de mémorisation sur le terminal des relevés statistiques sur l'utilisation des sélections mémorisées par ce dernier et une étape d'envoi, par le terminal, des informations correspondant aux relevés statistiques pendant une connexion entre le terminal et le serveur.

9. Dispositif de distribution d'informations audiovisuelles comprenant un serveur (2) comportant des moyens (23) de mémorisation de masse comportant des informations audiovisuelles de représentation d'une pluralité de sélections musicales et/ou vidéo, et au moins un terminal (1) comprenant des moyens (140) de mémorisation et une liaison (3) bidirectionnelle de communication avec le serveur (2), le dispositif étant **caractérisé en ce que** les moyens de mémorisation du serveur (2) comprennent une identification de chaque terminal définissant l'utilisation des informations audiovisuelles transmises au terminal, chaque terminal (1) comprend des moyens interactifs avec l'utilisateur pour permettre le choix (121, 122) d'au moins une sélection au travers de la liaison (3) de communication avec le serveur (2) et des moyens (13, 130) d'exécution des informations envoyées par le serveur (2) et représentatives d'une sélection audiovisuelle.

10. Dispositif de distribution d'informations audiovisuelles selon la revendication 9, **caractérisé en ce que** chaque terminal (1.1.1 à 1.n.n₃) est connecté, par une liaison bidirectionnelle, à un serveur (4.1 à 4.n) multiservice également connecté au serveur (2) par une liaison bidirectionnelle, chaque serveur (4.1 à 4.n) multiservice comprenant des moyens pour transmettre, d'une part chaque message du serveur (2) destiné au terminal (1.1.1 à 1.n.n₃) et d'autre part chaque message du terminal (1.1.1 à 1.n.n₃)destiné au serveur (2).

11. Dispositif de distribution d'informations audiovisuelles selon la revendication 9 ou 10, **caractérisé en ce que** les moyens d'exécution comprennent des moyens d'exécuter en temps réel sur le terminal les informations audiovisuelles envoyées par le serveur (2).

12. Dispositif de distribution d'informations audiovisuelles selon la revendication 11, **caractérisé en ce que** les moyens d'exécution du terminal comprennent des moyens (133.1, 133.2, 133.3) d'interdire la réutilisation des informations audiovisuelles envoyées.

13. Dispositif de distribution d'informations audiovisuelles selon la revendication 11, **caractérisé en ce que** les moyens d'exécution du terminal comprennent des moyens de mémorisation des informations audiovisuelles envoyées.

14. Dispositif de distribution d'informations audiovisuelles selon la revendication 11, **caractérisé en ce que** le terminal comprend des moyens d'enregistrement d'informations relatives à l'utilisation des sélections envoyées par le serveur vers le terminal.

15. Dispositif de distribution d'informations audiovisuelles selon la revendication 14, **caractérisé en ce que** le serveur comprend des moyens de calcul des redevances à verser à chacun des ayants droit sur l'utilisation des sélections envoyées aux terminaux, à partir des informations enregistrées par le serveur et transmises par chaque terminal concernant l'utilisation des sélections.

16. Dispositif de distribution d'informations audiovisuelles selon la revendication 11, **caractérisé en ce que** les moyens d'exploitation comprennent un processeur de traitement de signaux digitaux (DSP) comprenant des moyens de décodage des informations audiovisuelles transmises par le serveur pour obtenir des informations numériques, un convertisseur numérique analogique, au moins une sortie d'informations numériques vers des moyens de mémorisation et des moyens de commande de chaque sortie numérique pour autoriser ou non le stockage des informations numérique.

17. Dispositif de distribution d'informations audiovisuelles selon l'une des revendications 9 à 16, **caractérisé en ce** les moyens (121, 122) interactifs du terminal (1) comprennent des moyens de sélection comportant un pointeur et/ou un écran tactile associé à des moyens de visualisation assurant l'affichage d'une pluralité d'écrans de dialogue, et/ou un système à commande vocale associé à des moyens de restitution sonore assurant la reproduction de messages vocaux.
